# EUROPÄISCHE PATENTSCHRIFT

(11) **EP 3 539 065 B1**
(45) Veröffentlichungstag und Bekanntmachung des Hinweises auf die Patenterteilung: **11.03.2026**
(21) Anmeldenummer: 17801027.8
(22) Anmeldetag: 08.11.2017
(51) Int. Cl.: G06Q 10/08, B65G 1/137

(54) **VERFAHREN UND ANLAGE ZUR LOGISTIK VON TEILEN**
METHOD AND APPARATUS FOR LOGISTICS OF PARTS
PROCÉDÉ ET APPAREIL POUR LA LOGISTIQUE DE PIÈCES

(30) Priorität: 08.11.2016 DE 102016121315
(43) Veröffentlichungstag der Anmeldung: 18.09.2019
(73) Patentinhaber: RSL Logistik GmbH & Co. KG, 86899 Landsberg (DE)
(72) Erfinder: SCHÖNENBERGER, Rolf, 86899 Landsberg am Lech (DE)
(74) Vertreter: Canzler & Bergmeier Patentanwälte Partnerschaft mbB
(86) Internationale Anmeldenummer: PCT/EP2017/078520
(87) Internationale Veröffentlichungsnummer: WO 2018/087107

(56) Entgegenhaltungen:
- EP-A1- 0 645 322
- EP-A1- 2 581 329
- EP-A1- 2 752 377
- EP-A1- 2 899 144
- WO-A1-2013/126048
- WO-A1-2015/124525
- WO-A2-00/68859
- DE-A1- 19 807 971
- DE-A1- 4 026 546
- DE-U1- 29 516 745
- US-A1- 2006 170 913
- US-B1- 6 208 908
- US-B1- 9 409 711

## Beschreibung

Die vorliegende Erfindung betrifft ein Verfahren und eine Anlage zur Logistik von Teilen, insbesondere zu deren Bearbeitung, Verfolgung und Verteilung in einer Anlage.

Aus dem Stand der Technik ist ein gattungsgemäßes Verfahren bekannt, bei welchem mit konventioneller Fördertechnik eine Vielzahl von Teilen, z. B. Briefe, Päckchen oder Kartons, transportiert, abgewickelt, sortiert und dem Warenausgang zugeführt werden. Dabei steht die 'Förder-Leistung' wie Teile pro Stunde häufig im Vordergrund. Das einzelne Teil wird dabei nicht berücksichtigt. WO 2013/126048 A1 beschreibt ein System zum automatischen Aufnehmen zerbrechlicher Artikel/Produkte in einer Materialhandhabungsanlage und verfügt über einen Prozessor zum Speichern eines Kommissionierplans, einschließlich vom Prozessor ausführbarer Anweisungen zur Steuerung des automatischen Kommissionierers zum Aufnehmen von Artikeln/Produkten im Speicher. D1 bezieht sich nicht auf eine Hängebahn mit Trolleys. EP 2 899 144 A1 beschreibt eine Fördervorrichtung zur automatisierten Abgabe von Einzelprodukten entlang der Förderrichtung, mit Adapter-Identifikationseinheit mit Adapter zur Aufnahme von Einzelprodukten, wobei jedes Einzelprodukt mit einem individuellen Warentransponder versehen ist.

Aufgabe der vorliegenden Erfindung ist es somit, mit Hilfe einer Individualisierung der Teile die Prozesse im Betrieb und die Logistik vom Teil, d.h. vom zu behandelnden Objekt aus zu denken bzw. dann durchzuführen.

Die Aufgabe wird gelöst durch ein Verfahren und eine Anlage mit den Merkmalen der unabhängigen Patentansprüche.

Bei dem erfindungsgemäßen Verfahren zur Logistik von Teilen, insbesondere zu deren Bearbeitung, Verfolgung und Verteilung in einer Anlage, wird jedes einzelne Teil als Unikat erfasst. Jedes einzelne Teil durchläuft im Zuge eines individuellen Karrierewegs Prozesse. Die Logistik des einzelnen Teils wird von den notwendigen Prozessen ausgelöst. Als Karriereweg wird beispielsweise die individuelle Veränderung des Teils verstanden, während es sich in der Anlage befindet. So kann beispielsweise bei beschädigten oder schmutzigen, gebrauchten Teilen eine schrittweise Reparatur oder Reinigung erfolgen und sich das Teil in diesem Zusammenhang verbessern bzw. verändern. Erfindungsgemäß wird erkannt, welche Prozesse für das individuelle Teil nötig sind und das Teil wird dementsprechend an entsprechende Stationen gefördert, um die Prozesse erledigen zu können. Die Logistik des Teils erfolgt somit in Abhängigkeit des individuellen Zustands des Teils. Jedes Teil durchläuft somit als Unikat einen individuellen Weg in der Anlage bis es eine Karriere bzw. Entwicklung bzw. Veränderung vollzogen hat, welche es für eine weitere Aktion, beispielsweise eine Einlagerung oder eine Kommissionierung, geeignet macht.

Erfindungsgemäß sind notwendige Prozesse beispielsweise insbesondere die Erfassung und die Ergänzung von Eigenschaften des einzelnen Teils und zur Erfüllung von Aufträgen die Kommissionierung, gegebenenfalls mit weiteren Teilen, des einzelnen Teils. Das Teil entwickelt sich dementsprechend in seiner individuellen Karriere fort. Der individuelle Karriereweg des einzelnen Teils ist dessen Zustandsveränderung und die dafür notwendigen Prozesse.

Das einzelne Teil wird mit einem Trolley als Warenträger verbunden/verheiratet, der mit einem Lese- und/oder Schreibelement, insbesondere einem Barcode oder Transponder, ausgestattet ist, wodurch das einzelne Teil zum Unikat wird. Der Trolley bzw. Warenträger dient damit zur einzigartigen Kennzeichnung der Ware.

In einer der Anlage zugeordneten Datenbank wird zu jedem Lese- und/oder Schreibelement ein offener Datensatz angelegt bzw. generiert, der zu einem elektronisch beschreibbaren, individuellen Datensatz pro Teil verknüpft wird. In dem Datensatz wird die Ware bzw. das Teil eindeutig bzgl. seiner vorhandenen oder seiner fehlenden Eigenschaften gekennzeichnet. Sobald sich eine Eigenschaft des Teils ändert, wird dies in dem Datensatz aktualisiert.

Das einzelne Teil wird auf Vorhandensein von Informationen, wie z.B. Artikel-Nr. und/oder Artikelbeschreibung, überprüft bzw. auf Vorhandensein vorbestimmter Eigenschaften, beispielsweise Zustand des Teils, untersucht und vorhandene oder ermittelte Eigenschaften werden in den Datensatz eingetragen.

Das einzelne Teil wird an zumindest einem Arbeitsplatz mit zumindest einer Eigenschaft ergänzt und diese ergänzte Eigenschaft wird in den Datensatz eingetragen. Hierdurch entwickelt sich das Teil fort und der Datensatz wird im Laufe der Zeit ergänzt, im Idealfall bis das Teil komplett ist und versandt werden kann.

Die Logistik des einzelnen Teils erfolgt in Abhängigkeit seiner vorhandenen und/oder fehlenden Eigenschaften und/oder der erforderlichen Ergänzung seiner Eigenschaften. Die Logistik erfolgt somit individuell für jedes Teil, das als Unikat behandelt wird.

Vorteilhaft ist es, wenn das einzelne Teil einer individuell bestimmten Prozesskette, z.B. für Retourenteile, zugeführt wird oder wenn Eigenschaften der Teile, wie Farbe, Form oder Größe, bis hin zur Identifikation des Teils z.B. Wasserflasche oder 0,5 l gefüllte Cola-Flasche, an Arbeitsstationen manuell oder automatisch ermittelt werden, insbesondere indem Teile, z.B. in und/oder außerhalb der Anlage, fotografiert werden. Es wird damit eine Art Bestandsaufnahme des Teils gemacht, wodurch zu ergänzende oder zu ändernde Eigenschaften ermittelt werden können und der erforderliche Karriereweg des individuellen Teils bestimmt werden kann.

Vorteilhaft ist es, wenn das einzelne Teil, insbesondere vor einem Stauen und/oder Einlagern in der Anlage, einer Qualitätsprüfung unterzogen wird. Damit können die vorhandenen/fehlenden Eigenschaften des Teils erfasst und in den Datensatz eingetragen werden.

Vorteilhaft ist es, wenn das einzelne Teil nach Ergänzung der Eigenschaft/en an den Arbeitsplätzen oder nachdem festgestellt wurde, dass keine weitere Eigenschaft ergänzt werden soll, einer Stauzone, einem Puffer oder einem Lager zugeführt wird. Damit kann das Teil für den nächsten Prozess bei Bedarf abgerufen werden.

Vorteilhaft ist es, wenn das einzelne Teil bei Vorhandensein oder Fehlen bestimmter Eigenschaften einem Lager zugeführt wird, aus dem das einzelne Teil online oder über Einzelhandel verkauft wird.

Vorteilhaft ist es, wenn das einzelne Teil bei Fehlen weniger wichtiger oder einer geringen Anzahl von Eigenschaften einem Großhandels-Lager zugeführt wird, aus dem das einzelne Teil einem Großhandel verkauft wird.

Vorteilhaft ist es, wenn das einzelne Teil bei Fehlen wichtiger oder einer großen Anzahl von Eigenschaften einem Recycling-Lager zugeführt wird, aus dem das einzelne Teil einem Recycling- oder sonstigen Verwertungs-Prozess zugeführt wird.

Durch die Auswertung der Eigenschaften des Teils kann dementsprechend eine Zuordnung zur weiteren Verwendbarkeit des Teils getroffen werden.

Vorteilhaft ist es, wenn die einzelnen Teile auf Warenträger, insbesondere auf Trolleys, die mit dem Lese- und/oder Schreibelement, insbesondere einem Barcode oder Transponder, ausgestattet sind, an denen einzelne Teile befestigt, z.B. geklammert oder auf Bügeln gehängt, oder aufgegeben, z.B. in Taschen oder Beutel, Gitterkörbe oder Ablagen, werden und die ein Warenetikett oder vorhandene Eigenschaften aufweisen, transportiert werden, wobei die Warenträger bzw. die damit verbundenen Teile als einzelne Unikate behandelt werden. Die Teile und der Warenträger können somit in der Datenbank und dem Datensatz "verheiratet" werden, so dass das Teil ein Unikat wird.

Vorteilhaft ist es, wenn mittels einer Kodierung des einzelnen Teils die vorhandenen Eigenschaften in einem Datenspeicher abgespeichert werden und bei Bedarf der Kodierung des einzelnen Warenträgers zugeordnet werden. Die aktuellen Eigenschaften des Teils sind dann mit dem Warenträger verbunden und können einfach nachverfolgt werden.

Vorteilhaft ist es, wenn jeder Warenträger, insbesondere mittels eines Scanners oder eines RFID-Lesegerätes, erkannt und durch die Anlage gezielt zu Arbeitsstationen geführt und geschleust werden kann. Der Scanner bzw. das RFID-Lesegerät ist vorzugsweise ortsfest (jeweils an einem bestimmten Platz in der Anlage) installiert und kann von dort mit der Datenbank kommunizieren, insbesondere kann er
a) mitteilen, welcher Warenträger an welchem Scanner eingetroffen ist und
b) z.B. im variablen Datensatz dieses Warenträgers die Zieladresse für das nächste anzusteuernde Ziel erhalten (Kunde wünscht z.B. Lieferung mit einem bestimmten Versanddienstleister oder die Qualitätsprüfung stellt fest, dass ein Knopf angenäht werden muss →Ziel: Näherei ... etc.)

Er erkennt dabei die Eigenschaften des Teils oder auch nur das individuelle Teil an sich anhand des Barcodes bzw. des les- und beschreibbaren RFID-Chips und schaltet den unmittelbaren weiteren Weg des Teils und seines Warenträgers in der Förderanlage frei. Hierdurch wird für das Teil in Abhängigkeit seiner individuellen Eigenschaften eine eigene Logistik erstellt. Der Scanner bzw. das RFID-Lesegerät ist dementsprechend vorzugsweise in der Nähe einer Weiche der Förderanlage angeordnet und ist in der Lage die Weiche nach Bedarf zu schalten. Er kann aber natürlich auch an einer anderen Stelle vorgesehen sein und auf eine größere Entfernung eine oder mehrere Weichen entsprechend des zu verfahrenden Teils und seines Warenträgers schalten. Der Scanner bzw. das RFID-Lesegerät kann somit zu einem Entscheidungspunkt werden. Es findet eine Kommunikation mit der Datenbank bzw. einem variablen Datensatz pro Trolley (und damit mit dem verbundenen Teil) statt.

Vorteilhaft ist es, wenn an den Arbeitsstationen Informationen über die momentanen Eigenschaften des einzelnen Teils erfasst bzw. die Aufgabe in der Prozesskette an diesem Arbeitsplatz angezeigt werden und nach dem Bearbeiten des einzelnen Teils alle Informationen, die für dieses Teil wichtig oder relevant sind, elektronisch im Datensatz gespeichert werden können. An dem Arbeitsplatz kann damit individuell das Teil bearbeitet und in seiner Karriere fortentwickelt werden. Nach der Bearbeitung wird der Datensatz aktualisiert.

Abhängig von den momentanen Eigenschaften des einzelnen Teils und dem Standort des einzelnen Teils wird der weitere Transportweg des einzelnen Teils ermittelt. Dies kann beispielsweise durch die Erkennung mittels eines Scanners und die entsprechende Anweisung einer Steuerung erfolgen.

Der weitere Transportweg des einzelnen Teils wird entsprechend einer aktuellen Auslastung der Arbeitsplätze ermittelt. Das Teil kann dann zu einem anderen Arbeitsplatz geleitet werden, bei dem freie Kapazitäten vorhanden sind, auch wenn dort eine andere Eigenschaft des Teils ergänzt wird. Die Karriere des Teils kann somit individuell und in Abhängigkeit der Auslastung der Anlage entwickelt werden. Alternativ kann das Teil auch in einen Pufferspeicher gebracht werden.

Vorteilhaft ist es, wenn das einzelne Teil in den Staubereichen bzw. den Lagerzonen dynamisch gelagert und - sobald sinnvoll - kommissioniert wird.

Vorteilhaft ist es, wenn die einzelnen Teile auf Warenträger, insbesondere auf Trolleys hängend, transportiert werden, wobei die Warenträger alle mittels eines Lese- und/oder Schreibelements, insbesondere Barcodes oder RFID-Chips, als einzelne Unikate gekennzeichnet sind.

Die einzelnen Teile können z.B. Retouren oder gebrauchte Textilien sein. Dabei ist es vorteilhaft, wenn die Teile auf ihren Zustand bzw. ihre weitere Verarbeitung überprüft werden und die Identifikation sowie der Zustand mittels der ermittelten Eigenschaften festgestellt wird und die notwendigen Schritte in der Prozesskette vorgegeben werden.

Erfindungsgemäß werden als Eigenschaften das Vorhandensein aller Knöpfe, Funktionsfähigkeit von Reißverschlüssen, Löcher in der Textilie und/oder der Allgemeinzustand der Textilie definiert und im individuellen Datensatz eingetragen. Vorteilhaft ist es, wenn auch die Größe und/oder der Allgemeinzustand der Textilie definiert werden.

Das beschriebene Verfahren dient zum Bearbeiten, Verfolgen und Distribuieren von Teilen/Waren mit folgender Charakteristik: Jedes Teil wird als Unikat betrachtet und trotzdem als 'Massenphänomen'. Es wird prozessorientiert abgewickelt, gesteuert und begleitet.

Ein Beispiel für eine Anwendung der Erfindung ist ein Automobilzulieferer, der für ein Montageband für Pkws von 5 Herstellern "just in time" und "just in sequence" die Produktion versorgen soll. Alle 1,5 Min. werden die Informationen für das nächste benötigte Fahrzeug elektronisch mitgeteilt. Aus einem dynamischen Puffer mit über 30.000 Teilen und zusätzlich über 10.000 Teile in einem angebundenen statischen Lager mit über 15.000 unterschiedlichen Artikelpositionen, sog. SKUs (stock keeping units) werden die Teile der Produktion zugeführt. Die Zeit von dieser Mitteilung bis zur Übergabe an eine/oder mehrere Übergabestellen beträgt nur rund 90 Minuten.

Erfindungsgemäß erfolgt eine Individualisierung der Teile: In einem Flugzeug die 'Bordkarte' plus der Personalausweis des Passagiers sind das 'Einlass-Ticket', die (nach Hersteller variable) Identifikation pro Teil werden über eine Datenbank und die sog. 'Verheiratung' mit nummerierten, 'unique' Trolleys individualisiert, d.h. jedes Teil wird zu einem Unikat. Die Datensätze der einzelnen Teile können total verschieden sein, es können sogar Teile ohne Artikel-Nr. vorhanden sein.

Der Grundgedanke ist: Die Prozesse im Betrieb und die Logistik werden vom Teil, vom Objekt aus gedacht. Das Objekt benötigt eine bestimmte Behandlung, um seine Kariere zu machen, das heißt vollkommen zu werden, und dementsprechend durchläuft es einen individuellen Weg in der Anlage. Das Teil wird als Unikat erkannt, bearbeitet und bewegt.

Die erfindungsgemäßen Prozesse sind wie folgt: die Ware fließt, wie beispielsweise in der Verkehrstechnik. Hohes Aufkommen ist zu bewältigen, Störungen/Kreuzungen sind zu beherrschen, Vorfahrten, Hauptrichtungen, 'grüne Wellen' sind zu definieren, zu gestalten. Es gibt Entscheidungspunkte. Dort lesen beispielsweise Scanner einen Barcode oder Transponder des Trolleys. Sie identifizieren die Ware und geben jedem Teil/Trolley 'sein Ziel' bzw. seinen weiteren Weg vor.

Der Karriereweg jedes Teils kann unterschiedlich sein. Es handelt sich um lauter Individuen, lauter Unikate und trotzdem ist es zu dem Zweck in der Anlage, sie am Warenausgang mit einer Zieladresse wieder zu verlassen.

Es handelt sich um ein datenbasiertes Betriebsmodell: Vom Wareneingang (Beladen des Trolleys) bis zum Warenausgang wird jedes Teil als Unikat begleitet, überwacht, verfolgt, gesteuert und selbst bei Abweichungen (Fehlern) wieder 'auf die Spur' gebracht.

Eine Besonderheit ist das Daten-Management: ein offener Datensatz pro Teil, der nahezu beliebig erweiterbar bzw. veränderbar ist.

Das Daten-Management erlaubt einen offenen Datensatz pro Teil, um die 'Unikate' weiter zu charakterisieren, beschreiben, (z.B. Artikel-Nr.: Teil definieren: Artikel, Farbe, Größe) ergänzt durch Beurteilung, Bewertung, Zustand: neu, gebraucht; 1./2. Wahl; Produktionsangaben des Teils.

Der Datensatz enthält pro Teil z.B. drei Bereiche
a) unique barcode trolley + unique barcode Teil/item
b) IN Teile-, Produkt-, Prozess-orientierte Felder Abschluss: Teil ... ab jetzt ... qualifiziert für Versand
c) OUT Versand-orientierte Prozesse bis zum Verlassen des Betriebes, z.B. Verpacken, Wiegen ... bis zum Beladen des LKW, etc.

In dem offenen Datensatz des Teils können Felder für Warenausgangsinformationen vorgesehen sein: Zuordnung des Teils zu einem Adressaten/ Empfänger: Kunde; Lieferant; Besonderheit vor Auslieferung: z.B. 'value added services'; Exportpapiere usw.

Die Anlage weist insbesondere "holding buffer zones", d.h. Arbeitsstationen mit jeweils vor- und nachgelagerten Ruhezonen (wartender Transport) auf.

In der Steuerung der Anlage kann auch ein Retouren-Management hinterlegt sein. Dabei wird eine Prozesskette festgelegt, die abhängig vom Zustand der Ware sein kann, z.B. 'ok' für Verkauf, neu verpacken, chemisch reinigen; Teil nur '2nd-Hand' bzw. Kiloware oder Recycling.

Bei der Erfindung steht 'Customization' - Individualisierung - im Vordergrund. Der Blickwinkel ändert sich im Laufe der Zeit: am Eingang ist das Teil/Produkt im Vordergrund; beim Ausgang beherrschen der Empfänger und seine Wünsche die Szene.

Die Erfindung lässt sich generell mit event driven logistic - Ereignis gestützte Logistik - oder/aber auch als Massenfertigung mit der Losgröße 1 bezeichnen.

Das Prozess-Management erfolgt derart, dass bspw. Scanner an Entscheidungspunkten vorhanden sind, welche das nächste Fahrziel vorgeben bzw. bestätigen können.

Eine erfindungsgemäße Anlage dient zur Durchführung des oben beschriebenen Verfahrens. Die Anlage weist eine Steuerung, eine Datenbank sowie eine Hängebahn mit einer Vielzahl von Trolleys als Warenträger zur Aufnahme von Teilen auf. Außerdem ist zumindest ein Arbeitsplatz vorgesehen, an dem zumindest eine Eigenschaft eines Teils ergänzt wird. Jeder Trolley ist mit einem Lese- und/oder Schreibelement verbunden und zu jedem Lese-und/oder Schreibelement ist ein offener Datensatz angelegt/generiert, der zu einem elektronisch beschreibbaren, individuellen Datensatz pro Teil verknüpft ist. Jedes einzelne Teil ist als Unikat erfasst, wobei jedem einzelnen Teil im Zuge eines individuellen Karrierewegs von der Steuerung Prozesse zugewiesen sind und die Logistik des einzelnen Teils von den notwendigen Prozessen ausgelöst ist.

Der Arbeitsplatz ist derart ausgestattet, dass das Teil mit zumindest einer Eigenschaft ergänzt werden kann.

Vorteilhaft ist es, wenn die bestehenden, die fehlenden und/oder die ergänzten Eigenschaft/en in den Datensatz eingetragen sind.

Das Verfahren und auch gegenständlichen Merkmale gemäß der vorangegangenen Beschreibung können einzeln oder in beliebiger Kombination vorhanden sein.

Weitere Vorteile der Erfindung sind in den nachfolgenden Ausführungsbeispielen beschrieben. Es zeigt:
- **Figur 1**: ein Beispiel eines Ablaufdiagramms des Prozess-Managements in einer erfindungsgemäßen Anlage,
- **Figur 2**: eine Zuordnung von Eigenschaften eines Teils zu einem Schreib-/Leseelement gemäß dem erfindungsgemäßen Daten-Management,
- **Figur 3**: ein Beispiel eines Materialflusses,
- **Figur 4**: ein Beispiel eines Layouts einer ersten Ebene und
- **Figur 5**: ein Beispiel eines Layouts einer dritten Ebene.

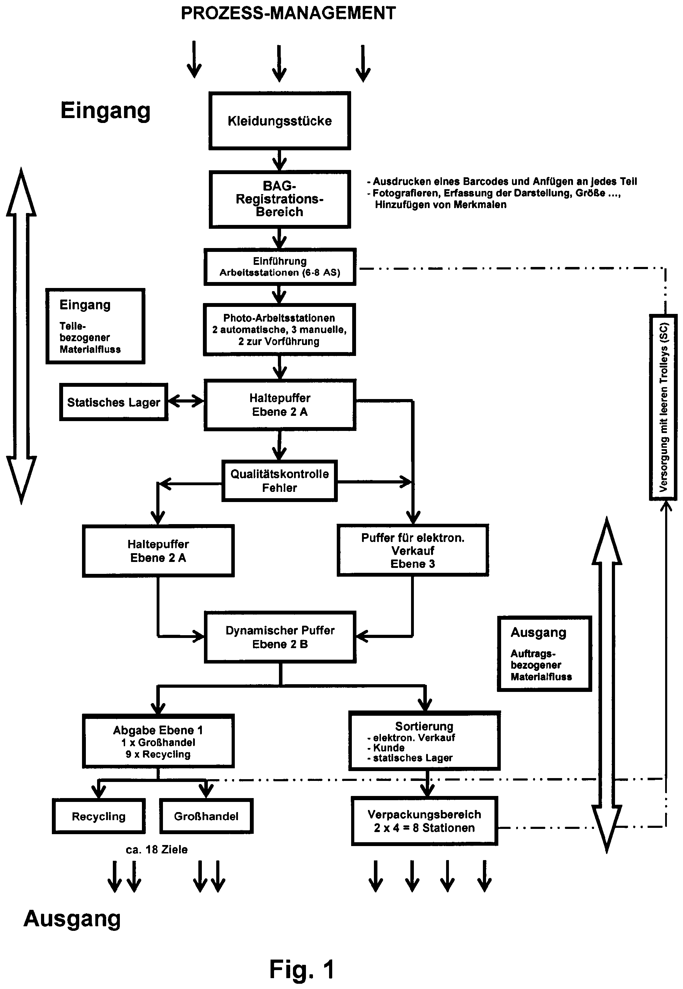

Wie in Figur 1 dargestellt, erfolgt insbesondere der Ablauf im Eingangsbereich der Anlage auf das individuelle Teil bezogen. Später, im Ausgangsbereich der Anlage steht eher der Auftrag im Vordergrund. Selbstverständlich ist es aber auch erfindungsgemäß möglich, dass die gesamte Anlage Teilebezogen abläuft.

Das Teil, hier ein Kleidungsstück, gelangt in die Anlage und wird als erstes in der Registration Area registriert. Es wird ein Barcode ausgedruckt und jedem Teil hinzugefügt. Das Teil wird weiterhin fotografiert und die verschiedenen Eigenschaften des Teils werden erfasst. Diese Erfassung kann manuell erfolgen, das heißt, dass eine Person das Teil inspiziert und die gefundenen oder die fehlenden Eigenschaften in die Datenbank in Bezug auf das Teil bzw. dessen Barcode eingibt. Es kann aber auch automatisch erfolgen, indem das Foto des Teils ausgewertet wird und die Eigenschaften des Teils erfasst und in die Datenbank eingegeben werden.

Nach der Erfassung und Registrierung der Teile werden sie, jedes auf einem eigenen Trolley angeordnet. Sodann wird das Teil je nach Bedarf zur Vervollständigung fehlender Eigenschaften zu verschiedenen Arbeitsstationen befördert und dort bearbeitet. Die Arbeitsstationen sind unterschiedlich ausgestattet, beispielsweise wieder mit einer Photostation, automatischen oder manuellen Einrichtungen zum Verbessern der Eigenschaften des Teils, also zur Verbesserung dessen Karriere. Die Logistik des jeweiligen Teils erfolgt derart, dass jedes einzelne Teil als Unikat erfasst wird, wobei jedes einzelne Teil im Zuge eines individuellen Karrierewegs Prozesse durchläuft und die Logistik des einzelnen Teils von den notwendigen Prozessen ausgelöst wird. Das einzelne Teil wird dabei abhängig von dessen individuell erforderlichen Arbeiten und der gerade freien Kapazitäten der Arbeitsstationen zu den einzelnen Arbeitsstationen verfahren. Die Logistik des einzelnen Teils erfolgt in Abhängigkeit seiner vorhandenen und/oder fehlenden Eigenschaften und/oder der erforderlichen Ergänzung seiner Eigenschaften. Dabei wird jeder Warenträger, insbesondere mittels eines Scanners, erkannt und kann durch die Anlage gezielt zu Arbeitsstationen geführt und geschleust werden.

Bei der Anlage gemäß Figur 1 wird anschließend, wenn die Eigenschaften des Teils soweit wie erforderlich oder möglich verbessert wurden, einem Haltepuffer zugeführt, aus dem es in weitere Stationen verteilt werden kann. Im vorliegenden Fall wird das Teil entweder in ein statisches Lager gefördert, zum Beispiel, wenn es voraussichtlich längere Zeit nicht benötigt wird. Alternativ kann es direkt oder über eine Qualitätskontrolle einem Puffer zugeführt werden, der für den Verkauf des Teils über den Online-Handel vorgesehen ist. Wiederum alternativ wird das Teil über die Qualitätskontrolle einem Haltepuffer zugeführt. Wenn das Teil kommissioniert werden soll, gelangt es schließlich in einen dynamischen Puffer und von dort aus je nach Auftrag und Eigenschaft des Teils an Ausgangsstellen für das Recyceln des Teils, den Verkauf im Großhandel oder die Verpackung und den Verkauf im Einzelhandel.

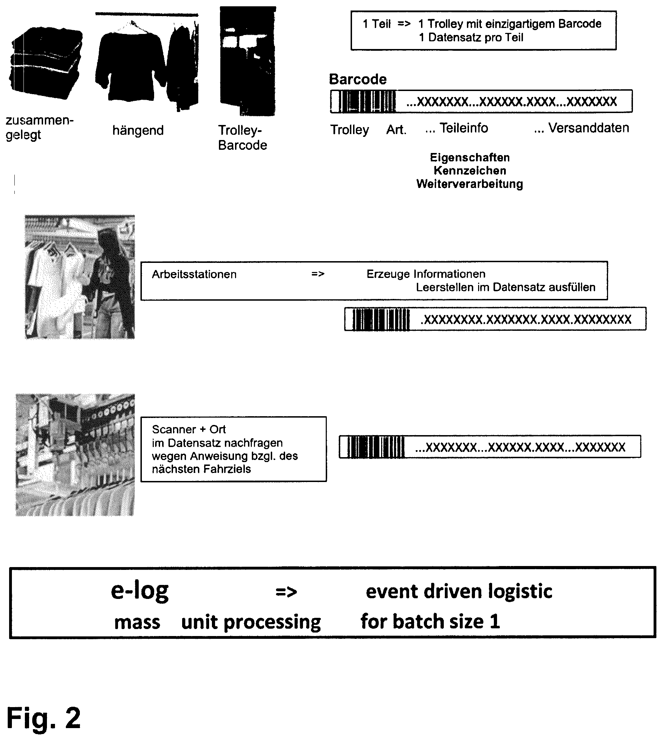

In Figur 2 ist eine Ausführungsvariante des Daten-Managements der vorliegenden Erfindung dargestellt. Ein Datensatz ist einem individuellen Pärchen von Trolley und Teil zugeordnet. Mittels eines Barcodes werden der Trolley und damit das Teil von Scannern erkannt. In einer der Anlage zugeordneten Datenbank wird zu jedem Lese- und/oder Schreibelement ein offener Datensatz angelegt/generiert, der zu einem elektronisch beschreibbaren, individuellen Datensatz pro Teil verknüpft wird. Die Teileinfos zu den Eigenschaften des Teils und gegebenenfalls auch Versanddaten sind dem Datensatz einverleibt. Diese Eigenschaften werden im Verlauf der Bearbeitung des Teils an den Arbeitsplätzen ergänzt. Es werden somit nach und nach die Lücken des Datensatzes, welche fehlende Eigenschaften darstellen, belegt. Bei einer Abfrage der aktuellen Eigenschaften durch einen Scanner, kann der weitere Weg zu einer anderen Arbeitsstelle oder in ein bestimmtes Lager festgelegt werden, um die verbliebenen Lücken zu schließen. Es handelt sich somit um eine ereignisgestützte Logistik.

Die Ware bzw. das Teil wird gemäß einer individuellen Logistik bewegt. Bei einer großen Anzahl von einzelnen, individuellen Teilen, die individuell bewegt wird, entsteht ein sehr effektives Anlagenkonzept, das sehr schnell auch einzelne Teile mit ganz speziellen Eigenschaften erfassen, lagern und versenden kann.

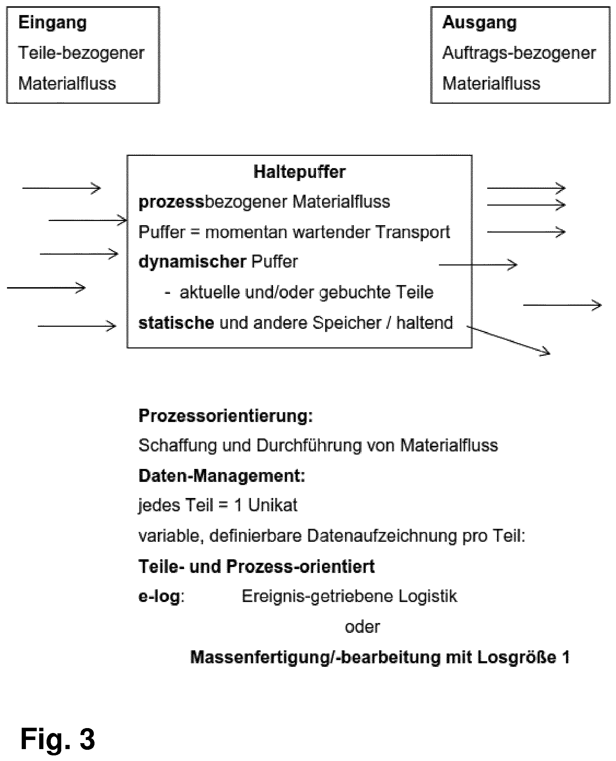

In Figur 3 ist ein erfindungsgemäßer Materialfluss dargestellt. Die einzelnen Teile werden anfangs teilebezogen behandelt. Später, für den Versand bzw. die Kommissionierung wird auftragsbezogen gearbeitet. Der Auftrag kann aber auch aus mehreren, aber auch aus nur einem Teil mit ganz bestimmten Eigenschaften bestehen. Die Teile befinden sich immer wieder in Wartepuffern, dynamischen Puffern oder statischen oder dynamischen Speichern, bis sie zu einer weiteren Bearbeitungsstation oder zum Versand gelangen.

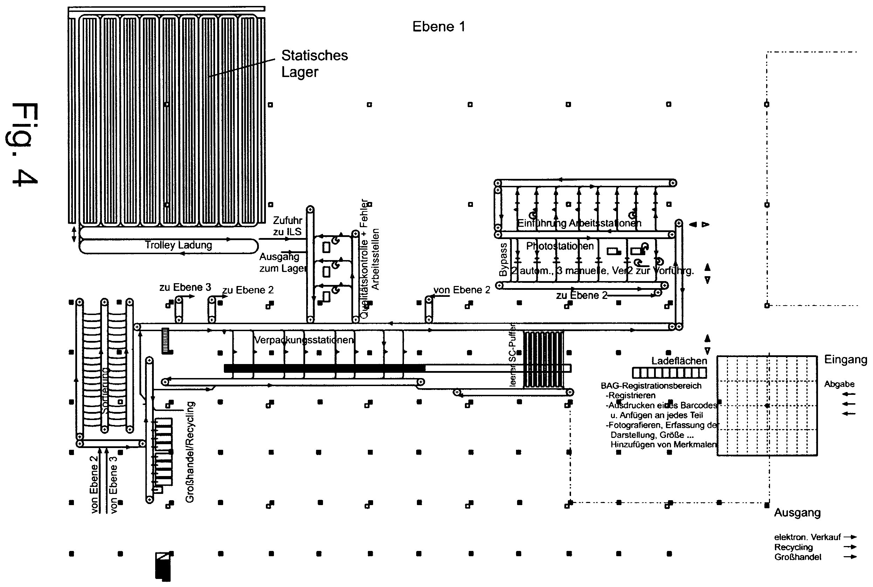

In Figur 4 ist ein Beispiel eines Layouts einer Ebene einer Anlage gezeigt. Das Layout beinhaltet Hängebahnschienen, Weichen, Arbeitsstationen und Puffer, welche das einzelne Teil durchlaufen kann und seine Karriere zu verbessern. In weiteren, nicht gezeigten Ebenen befinden sich weitere Speicher und Puffer für Trolleys mit ihren Teilen, welche sich gerade in einer Wartestellung befinden. Die Trolleys werden immer wieder von Scannern erfasst und zu ihrer nächsten Position geleitet. In dieser nächsten Position wird beispielsweise eine Eigenschaft des Teils verbessert, das Teil wird überprüft oder es wird gespeichert oder kommissioniert.

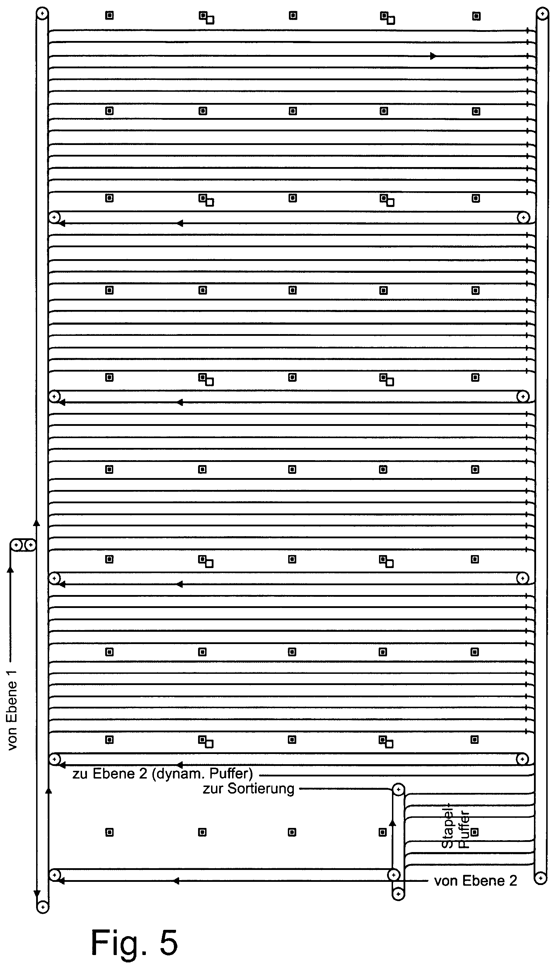

Figur 5 zeigt eine obere Ebene, beispielsweise eine dritte Ebene des Layouts der Figur 4. In dieser Ebene warten die Teile chaotisch oder nach einer vorbestimmten Einlager-Strategie sortiert auf ihren Abruf. Sie können markiert werden, so dass sie beispielsweise immer nach dem 'ältesten Abrufteil' (das Teil, das sich zeitlich am längsten im Filterprozess befindet) als Priorität gefiltert werden. Die Teile können zur Zwischenlagerung aus der ersten Ebene oder aus der zweiten Ebene in diese dritte Ebene geführt werden. Wenn die Teile für eine Kommissionierung benötigt werden, werden sie entweder in die zweite Ebene zur weiteren Filterung bzw. Sortierung oder in die erste Ebene zur Sortierung oder direkt zum Packplatz geführt werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

## Patentansprüche

1. Verfahren zur Steuerung einer Anlage und zur Logistik von Teilen, insbesondere zu deren Bearbeitung, Verfolgung und Verteilung in der Anlage, wobei
- jedes einzelne Teil als Unikat erfasst wird,
- das einzelne Teil mit einem Trolley verbunden/verheiratet wird, der mit einem Lese- und/oder Schreibelement, insbesondere einem Barcode oder Transponder, ausgestattet ist, wodurch das einzelne Teil zum Unikat wird,
- in einer der Anlage zugeordneten Datenbank zu jedem Lese-und/oder Schreibelement ein offener Datensatz angelegt/generiert wird, der zu einem elektronisch beschreibbaren, individuellen Datensatz pro Teil verknüpft wird und
- das einzelne Teil auf Vorhandensein von Informationen, wie z.B. Artikel-Nr. und/oder Artikelbeschreibung, überprüft bzw. auf Vorhandensein vorbestimmter Eigenschaften untersucht wird und vorhandene oder ermittelte Eigenschaften in den Datensatz eingetragen werden, **dadurch gekennzeichnet,**
- **dass** als Eigenschaften das Vorhandensein aller Knöpfe, Funktionsfähigkeit von Reißverschlüssen, Löcher in der Textilie und/oder der Allgemeinzustand der Textilie definiert und im individuellen Datensatz eingetragen werden,
- **dass** jedem einzelnen Teil im Zuge eines individuellen Karrierewegs von der Steuerung Prozesse zugewiesen werden und die Logistik des einzelnen Teils von den notwendigen Prozessen ausgelöst wird,
- **dass** der individuelle Karriereweg des einzelnen Teils dessen Zustandsveränderung ist und die dafür notwendigen Prozesse die Erfassung und die Ergänzung von Eigenschaften des einzelnen Teils und die Kommissionierung, gegebenenfalls mit weiteren Teilen, des einzelnen Teils sind,
- **dass** das einzelne Teil an zumindest einem Arbeitsplatz mit zumindest einer Eigenschaft ergänzt wird und diese ergänzte Eigenschaft in den Datensatz eingetragen wird,
- **dass** die Logistik des einzelnen Teils in Abhängigkeit seiner vorhandenen und/oder fehlenden Eigenschaften und/oder der erforderlichen Ergänzung seiner Eigenschaften erfolgt und
- **dass** abhängig von den momentanen Eigenschaften des einzelnen Teils und dem Standort des einzelnen Teils und entsprechend einer aktuellen Auslastung der Arbeitsplätze der weitere Transportweg des einzelnen Teils ermittelt wird und das Teil dann zu einem Arbeitsplatz geleitet werden, bei dem freie Kapazitäten vorhanden sind.

2. Verfahren nach dem vorherigen Anspruch, **dadurch gekennzeichnet, dass** das einzelne Teil einer individuell bestimmten Prozesskette, z.B. für Retourenteile, zugeführt wird oder dass Eigenschaften der Teile, wie Farbe, Form oder Größe, bis hin zur Identifikation des Teils, z.B. Wasserflasche oder 0,5 l gefüllte Cola-Flasche, an Arbeitsstationen manuell oder automatisch ermittelt werden, insbesondere indem Teile, z.B. in und/oder außerhalb der Anlage, fotografiert werden.

3. Verfahren nach einem oder mehreren der vorherigen Ansprüche, **dadurch gekennzeichnet, dass** das einzelne Teil, insbesondere vor einem Stauen und/oder Einlagern in der Anlage, einer Qualitätsprüfung unterzogen wird.

4. Verfahren nach einem oder mehreren der vorherigen Ansprüche, **dadurch gekennzeichnet, dass** das einzelne Teil nach Ergänzung der Eigenschaft/en an den Arbeitsplätzen oder nachdem festgestellt wurde, dass keine weitere Eigenschaft ergänzt werden soll, einer Stauzone, einem Puffer oder einem Lager zugeführt wird.

5. Verfahren nach einem oder mehreren der vorherigen Ansprüche, **dadurch gekennzeichnet, dass** das einzelne Teil in den Staubereichen bzw. den Lagerzonen dynamisch gelagert und - sobald sinnvoll - kommissioniert wird.

6. Verfahren nach einem oder mehreren der vorherigen Ansprüche, **dadurch gekennzeichnet, dass** das einzelne Teil bei Vorhandensein oder Fehlen bestimmter Eigenschaften einem Lager zugeführt wird, aus dem das einzelne Teil online oder über Einzelhandel verkauft wird und/oder dass das einzelne Teil bei Fehlen weniger wichtiger oder einer geringen Anzahl von Eigenschaften einem Großhandels-Lager zugeführt wird, aus dem das einzelne Teil einem Großhandel verkauft wird und/oder dass das einzelne Teil bei Fehlen wichtiger oder einer großen Anzahl von Eigenschaften einem Recycling-Lager zugeführt wird, aus dem das einzelne Teil einem Recycling- oder sonstigen Verwertungs-Prozess zugeführt wird.

7. Verfahren nach einem oder mehreren der vorherigen Ansprüche, **dadurch gekennzeichnet, dass** die einzelnen Teile auf Warenträger, insbesondere auf Trolleys, die mit dem Lese- und/oder Schreibelement, insbesondere einem Barcode oder Transponder, ausgestattet sind, an denen einzelne Teile befestigt, z.B. geklammert oder auf Bügeln gehängt, oder aufgegeben, z.B. in Taschen oder Beutel, Gitterkörbe oder Ablagen, werden und die ein Warenetikett oder vorhandene Eigenschaften aufweisen, transportiert werden, wobei die Warenträger bzw. die damit verbundenen Teile als einzelne Unikate behandelt werden.

8. Verfahren nach einem oder mehreren der vorherigen Ansprüche, **dadurch gekennzeichnet, dass** mittels einer Kodierung des einzelnen Teils die vorhandenen Eigenschaften in einem Datenspeicher abgespeichert werden und bei Bedarf der Kodierung des einzelnen Warenträgers zugeordnet werden.

9. Verfahren nach einem oder mehreren der vorherigen Ansprüche, **dadurch gekennzeichnet, dass** jeder Warenträger, insbesondere mittels eines Scanners, erkannt und durch die Anlage gezielt zu Arbeitsstationen geführt und geschleust werden kann.

10. Verfahren nach einem oder mehreren der vorherigen Ansprüche, **dadurch gekennzeichnet, dass** an den Arbeitsstationen Informationen über die momentanen Eigenschaften des einzelnen Teils erfasst bzw. die Aufgabe in der Prozesskette an diesem Arbeitsplatz angezeigt werden und nach dem Bearbeiten des einzelnen Teils alle Informationen, die für dieses Teil wichtig oder relevant sind, elektronisch im Datensatz gespeichert werden können.

11. Verfahren nach einem oder mehreren der vorherigen Ansprüche, **dadurch gekennzeichnet, dass** die einzelnen Teile z.B. Retouren oder gebrauchte Textilien sein können, die auf ihren Zustand bzw. ihre weitere Verarbeitung überprüft werden und die Identifikation sowie der Zustand mittels der ermittelten Eigenschaften festgestellt wird und die notwendigen Schritte in der Prozesskette vorgegeben werden.

12. Anlage zur Durchführung des Verfahrens nach einem oder mehreren der vorherigen Ansprüche, wobei die Anlage eine Steuerung, eine Datenbank sowie eine Hängebahn mit einer Vielzahl von Trolleys als Warenträger zur Aufnahme von Teilen und zumindest einen Arbeitsplatz aufweist, an dem zumindest eine Eigenschaft eines Teils ergänzt wird, wobei
- jeder Trolley mit einem Lese- und/oder Schreibelement verbunden ist und
- in der der Anlage zugeordneten Datenbank zu jedem Lese- und/oder Schreibelement ein offener Datensatz angelegt/generiert ist, der zu einem elektronisch beschreibbaren, individuellen Datensatz pro Teil verknüpft ist und
- jedes einzelne Teil als Unikat erfasst ist,
**dadurch gekennzeichnet,**
- **dass** als Eigenschaften das Vorhandensein aller Knöpfe, Funktionsfähigkeit von Reißverschlüssen, Löcher in der Textilie und/oder der Allgemeinzustand der Textilie definiert und im individuellen Datensatz eingetragen werden,
- **dass** jedem einzelnen Teil im Zuge eines individuellen Karrierewegs von der Steuerung Prozesse zugewiesen sind und
- die Logistik des einzelnen Teils von den notwendigen Prozessen ausgelöst ist und
- **dass** der Arbeitsplatz derart ausgestattet ist, dass das Teil mit zumindest einer Eigenschaft ergänzt werden kann,
- **dass** die Steuerung der Anlage die Logistik des einzelnen Teils in Abhängigkeit seiner vorhandenen und/oder fehlenden Eigenschaften und/oder der erforderlichen Ergänzung seiner Eigenschaften bewirkt und
- **dass** die Steuerung der Anlage abhängig von den momentanen Eigenschaften des einzelnen Teils und dem Standort des einzelnen Teils und entsprechend einer aktuellen Auslastung der Arbeitsplätze den weiteren Transportweg des einzelnen Teils ermittelt und das Teil dann zu einem Arbeitsplatz leitet, bei dem freie Kapazitäten vorhanden sind.

13. Anlage nach dem vorherigen Anspruch, **dadurch gekennzeichnet, dass** die bestehenden, die fehlenden und/oder die ergänzte/n Eigenschaft/en in den Datensatz eingetragen ist.

## Claims

1. A method for controlling an installation and for logistics of parts, in particular for processing, tracking and distributing them in the installation, wherein
- each individual part is detected as a single piece,
- the individual part is connected/coupled to a trolley which is equipped with a reading and/or writing element, in particular a barcode or transponder, as a result of which the individual part becomes a single piece,
- an open data set is created/generated for each reading and/or writing element in a database which is assigned to the installation, which open data set is linked to form an electronically writable, individual data set per part, and
- the individual part is checked for the presence of information, such as, for example, article number and/or article description, or is examined for the presence of predetermined properties, and existing or determined properties are entered into the data set,
**characterized in that**
- the presence of all the buttons, the functional capability of zip fasteners, holes in the textile and/or the general state of the textile are defined as properties and are entered into the individual data set,
- processes are assigned to each individual part by the controller in the course of an individual career path, and the logistics of the individual part are triggered by the necessary processes,
- the individual career path of the individual part is the change in state thereof and the processes necessary for this are the detecting and supplementing of properties of the individual part and the commissioning, if appropriate with further parts, of the individual part,
- the individual part is supplemented with at least one property at at least one workplace and this supplemented property is entered into the data set,
- the logistics of the individual part are carried out as a function of its existing and/or missing properties and/or the required supplementing of its properties, and
- the further transport path of the individual part is determined as a function of the current properties of the individual part and the location of the individual part and corresponding to a current loading capacity of the workplaces, and the part is then directed to a workplace in which free capacities are present.

2. The method according to the preceding claim, **characterized in that** the individual part is supplied to an individually determined process chain, for example for return parts, or **in that** properties of the parts, such as color, shape or size, up to the identification of the part, for example water bottle or 0.5 l filled Cola bottle, are determined manually or automatically at workstations, in particular by photographing parts, for example in and/or outside the installation.

3. The method according to one or more of the preceding claims, **characterized in that** the individual part is subjected to a quality check, in particular before jamming and/or storing in the installation.

4. The method according to one or more of the preceding claims, **characterized in that** the individual part, after supplementing the property(s) at the workplaces or after it has been determined that no further property is to be supplemented, is supplied to a jamming zone, a buffer or a store.

5. The method according to one or more of the preceding claims, **characterized in that** the individual part is stored dynamically in the jamming regions or the store zones and - as soon as appropriate - is commissioned.

6. The method according to one or more of the preceding claims, **characterized in that** the individual part, in the presence or absence of certain properties, is supplied to a store from which the individual part is sold online or via retail, and/or **in that** the individual part, in the absence of less important or a small number of properties, is supplied to a wholesale store from which the individual part is sold to a wholesale, and/or in that the individual part, in the absence of important or a large number of properties, is supplied to a recycling store from which the individual part is supplied to a recycling or other utilization process.

7. The method according to one or more of the preceding claims, **characterized in that** the individual parts are transported on goods carriers, in particular on trolleys, which are equipped with the reading and/or writing element, in particular a barcode or transponder, to which individual parts are fastened, for example clamped or suspended on brackets, or placed, for example in bags or sacs, grid baskets or trays, and which have a goods label or existing properties, wherein the goods carriers or the parts connected thereto are treated as individual single pieces.

8. The method according to one or more of the preceding claims, **characterized in that** the existing properties are stored in a data memory by means of a coding of the individual part and, if required, are assigned to the coding of the individual goods carrier.

9. The method according to one or more of the preceding claims, **characterized in that** each goods carrier, in particular by means of a scanner, can be identified and guided through the installation in a targeted manner to workstations and sluiced.

10. The method according to one or more of the preceding claims, **characterized in that** information about the current properties of the individual part is detected at the workstations or the task in the process chain is displayed at this workplace and, after the individual part has been processed, all information which is important or relevant for this part can be stored electronically in the data set.

11. The method according to one or more of the preceding claims, **characterized in that** the individual parts can be, for example, returns or used textiles, which are checked for their state or their further processing, and the identification and the state are determined by means of the determined properties and the necessary steps are predefined in the process chain.

12. An installation for carrying out the method according to one or more of the preceding claims, wherein the installation has a controlling means, a database and a suspended track with a multiplicity of trolleys as goods carriers for receiving parts and at least one workplace, at which at least one property of a part is supplemented, wherein
- each trolley is connected to a reading and/or writing element and
- an open data set is created/generated for each reading and/or writing element in the database which is assigned to the installation, which open data set is linked to form an electronically writable, individual data set per part, and
- each individual part is detected as a single piece,
**characterized in that**
- the presence of all the buttons, the functional capability of zip fasteners, holes in the textile and/or the general state of the textile are defined as properties and are entered into the individual data set,
- processes are assigned to each individual part by the controlling means in the course of an individual career path, and
- the logistics of the individual part are triggered by the necessary processes, and
- the workplace is equipped in such a way that the part can be supplemented with at least one property,
- the controlling means of the installation brings about the logistics of the individual part as a function of its existing and/or missing properties and/or the required supplementing of its properties, and
- the controlling means of the installation determines the further transport path of the individual part as a function of the current properties of the individual part and the location of the individual part and corresponding to a current loading capacity of the workplaces, and then directs the part to a workplace in which free capacities are present.

13. The installation according to the preceding claim, **characterized in that** the existing, the missing and/or the supplemented property/properties is/are entered into the data set.

## Revendications

1. Procédé de contrôle d'une installation et de logistique de pièces, en particulier pour leur traitement, leur poursuite et leur distribution dans l'installation, dans lequel
- chaque pièce individuelle est saisie comme pièce unique,
- la pièce individuelle est reliée/mariée à un chariot qui est équipé d'un élément de lecture et/ou d'écriture, en particulier d'un code à barres ou d'un transpondeur, ce qui fait que la pièce individuelle devient une pièce unique,
- dans une base de données associée à l'installation, pour chaque élément de lecture et/ou d'écriture, un enregistrement de données ouvert est créé/généré, qui est combiné en un enregistrement de données individuel, inscriptible électroniquement par pièce, et
- la pièce individuelle est vérifiée quant à la présence d'informations, comme par exemple le numéro d'article et/ou la description d'article, ou est examinée quant à la présence de propriétés prédéterminées et des propriétés présentes ou déterminées sont enregistrées dans l'enregistrement de données,
**caractérisé en ce que**
- en tant que propriétés, la présence de tous les boutons, la capacité de fonctionnement de fermetures à glissière, des trous dans le textile et/ou l'état général du textile sont définis et enregistrés dans l'enregistrement de données individuel,
- des processus sont attribués à chaque pièce individuelle au cours d'un parcours de carrière individuel par le contrôle et la logistique de la pièce individuelle est déclenchée par les processus nécessaires,
- le parcours de carrière individuel de la pièce individuelle est sa modification d'état et les processus nécessaires à cet effet sont l'acquisition et le supplément de propriétés de la pièce individuelle et la préparation de commandes, le cas échéant avec d'autres pièces, de la pièce individuelle,
- la pièce individuelle est complétée sur au moins un poste de travail par au moins une propriété et cette propriété complétée est enregistrée dans l'enregistrement de données,
- la logistique de la pièce individuelle s'effectue en fonction de ses propriétés présentes et/ou manquantes et/ou du supplément nécessaire de ses propriétés et
- en fonction des propriétés instantanées de la pièce individuelle et de la localisation de la pièce individuelle et en fonction d'une utilisation actuelle des postes de travail, le trajet de transport supplémentaire de la pièce individuelle est déterminé et la pièce est ensuite guidée vers un poste de travail pour lequel des capacités libres sont présentes.

2. Procédé selon la revendication précédente, **caractérisé en ce que** la pièce individuelle est acheminée à une chaîne de processus déterminée individuellement, par exemple pour des pièces de retour, ou **en ce que** des propriétés des pièces, telles que la couleur, la forme ou la taille, jusqu'à l'identification de la pièce, par exemple une bouteille d'eau ou une bouteille de Cola remplie de 0,5 l, sont déterminées manuellement ou automatiquement sur des stations de travail, en particulier en photographiant des pièces, par exemple dans et/ou à l'extérieur de l'installation.

3. Procédé selon une ou plusieurs des revendications précédentes, **caractérisé en ce que** la pièce individuelle est soumise à un contrôle de qualité, en particulier avant une mise en attente et/ou un stockage dans l'installation.

4. Procédé selon une ou plusieurs des revendications précédentes, **caractérisé en ce que** la pièce individuelle, après le supplément de la/des propriété(s) sur les postes de travail ou après qu'il a été constaté qu'aucune autre propriété ne doit être complétée, est acheminée à une zone de mise en attente, à un tampon ou à un stockage.

5. Procédé selon une ou plusieurs des revendications précédentes, **caractérisé en ce que** la pièce individuelle est stockée dynamiquement dans les zones de mise en attente ou les zones de stockage et - dès que cela est judicieux - est mise en commande.

6. Procédé selon une ou plusieurs des revendications précédentes, **caractérisé en ce que** la pièce individuelle, en cas de présence ou d'absence de propriétés déterminées, est acheminée à un stockage à partir duquel la pièce individuelle est vendue en ligne ou par vente au détail et/ou **en ce que** la pièce individuelle, en cas d'absence de propriétés moins importantes ou d'un faible nombre de propriétés, est acheminée à un stockage de commerce de gros à partir duquel la pièce individuelle est vendue à un commerce de gros et/ou **en ce que** la pièce individuelle, en cas d'absence de propriétés importantes ou d'un grand nombre de propriétés, est acheminée à un stockage de recyclage à partir duquel la pièce individuelle est acheminée à un processus de recyclage ou d'autre utilisation.

7. Procédé selon une ou plusieurs des revendications précédentes, **caractérisé en ce que** les pièces individuelles sont transportées sur des supports de marchandises, en particulier sur des chariots qui sont équipés de l'élément de lecture et/ou d'écriture, en particulier d'un code à barres ou d'un transpondeur, sur lesquels des pièces individuelles sont fixées, par exemple pincées ou suspendues sur des étriers, ou déposées, par exemple dans des sacs ou des poches, des paniers à grille ou des dépôts, et qui présentent une étiquette de marchandise ou des propriétés existantes, les supports de marchandises ou les pièces reliées à ceux-ci étant traités comme des pièces uniques individuelles.

8. Procédé selon une ou plusieurs des revendications précédentes, **caractérisé en ce qu'**au moyen d'un codage de la pièce individuelle, les propriétés existantes sont stockées dans une mémoire de données et, si nécessaire, sont associées au codage du support de marchandises individuel.

9. Procédé selon une ou plusieurs des revendications précédentes, **caractérisé en ce que** chaque support de marchandises, en particulier au moyen d'un scanner, peut être reconnu et guidé de manière ciblée à travers l'installation jusqu'à des stations de travail et acheminé.

10. Procédé selon une ou plusieurs des revendications précédentes, **caractérisé en ce que** sur les stations de travail, des informations sur les propriétés instantanées de la pièce individuelle sont saisies ou la tâche dans la chaîne de processus est affichée sur ce poste de travail et après le traitement de la pièce individuelle, toutes les informations qui sont importantes ou pertinentes pour cette pièce peuvent être stockées électroniquement dans l'enregistrement de données.

11. Procédé selon une ou plusieurs des revendications précédentes, **caractérisé en ce que** les pièces individuelles peuvent être par exemple des retours ou des textiles usagés, qui sont vérifiés quant à leur état ou leur traitement ultérieur et l'identification ainsi que l'état sont constatés au moyen des propriétés déterminées et les étapes nécessaires sont prédéfinies dans la chaîne de processus.

12. Installation pour la mise en œuvre du procédé selon une ou plusieurs des revendications précédentes, dans laquelle l'installation présente un contrôle, une base de données ainsi qu'une voie suspendue avec une pluralité de chariots comme supports de marchandises pour la réception de pièces et au moins un poste de travail, sur lequel au moins une propriété d'une pièce est complétée, dans laquelle
- chaque chariot est relié à un élément de lecture et/ou d'écriture et
- dans la base de données associée à l'installation, pour chaque élément de lecture et/ou d'écriture, un enregistrement de données ouvert est créé/généré, qui est combiné en un enregistrement de données individuel, inscriptible électroniquement par pièce, et
- chaque pièce individuelle est saisie comme pièce unique,
**caractérisé en ce que**
- en tant que propriétés, la présence de tous les boutons, la capacité de fonctionnement de fermetures à glissière, des trous dans le textile et/ou l'état général du textile sont définis et enregistrés dans l'enregistrement de données individuel,
- des processus sont attribués à chaque pièce individuelle au cours d'un parcours de carrière individuel par le contrôle et
- la logistique de la pièce individuelle est déclenchée par les processus nécessaires et
- le poste de travail est équipé de telle sorte que la pièce peut être complétée par au moins une propriété,
- le contrôle de l'installation provoque la logistique de la pièce individuelle en fonction de ses propriétés présentes et/ou manquantes et/ou du supplément nécessaire de ses propriétés et
- le contrôle de l'installation détermine, en fonction des propriétés instantanées de la pièce individuelle et de la localisation de la pièce individuelle et en fonction d'une utilisation actuelle des postes de travail, le trajet de transport supplémentaire de la pièce individuelle et guide ensuite la pièce vers un poste de travail pour lequel des capacités libres sont présentes.

13. Installation selon la revendication précédente, **caractérisée en ce que** la ou les propriétés existantes, manquantes et/ou complétées sont enregistrées dans l'enregistrement de données.
